(19)

Europäisches
Patentamt
European
Patent Office
Office européen
des brevets

(11) **EP 2 180 181 A1**

(12) **EUROPEAN PATENT APPLICATION**

(43) Date of publication:
**28.04.2010 Bulletin 2010/17**

(51) Int Cl.:
*F03D 1/02* *(2006.01)*    *F03D 1/04* *(2006.01)*

(21) Application number: **08018610.9**

(22) Date of filing: **23.10.2008**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(71) Applicant: **Lee, Jia-Yuan
Shihlin District
T'ai pei (TW)**

(72) Inventor: **Lee, Jia-Yuan
Shihlin District
T'ai pei (TW)**

(74) Representative: **Horak, Michael
Beukenberg Rechtsanwälte
Roscherstrasse 12
30161 Hannover (DE)**

(54) **Rotor structure of wind turbine**

(57)    A rotor structure is provided for a wind turbine
and includes a central hub from which a plurality of blades
radially extends. The blades have distal free ends that
are surrounded by and coupled to a circumferentially ar-
ranged hood for rotation therewith. As such, with the rotor
mounted to a generator of the wind turbine, when air flows
caused by winds get into wind facing surfaces of the
blades, the air flows are accelerated by either a divergent
configuration, a convergent configuration, or a conver-
gent-divergent configuration of the hood to remarkably
enhance the performance of wind power generation and
reduce the overall size of the rotor of the wind turbine.

Fig.3

# Description

(a) Technical Field of the Invention
The present invention generally relates to wind power generation techniques, and particularly to a rotor for application in wind turbines.
(b) Description of the Prior Art

Recently, with the increased price fluctuation of fossil fuels, a crisis of energy rises. Scientists of all the countries of the world are seeking for energy substitutes (green energy), such as solar energy, wind energy, tidal energy, and even bio-energy, in order to meet the needs of energy consumption of human beings by generation of electrical power with theses sustainable energy provided by the Nature and to achieve the goal of carbon reduction and energy saving. Taking wind energy as an example, the development of the wind energy based power generation has started since the first wind turbine built up by Danish meteorologist Poul La Cour in the 19th century. The wind energy is a non-exhaustible, non-polluting, and self-generated energy and has a wide distribution over the whole world so that it can be various local needs of power supply, reduces power loss due to long distance transmission, and lowers down the costs of power supplying.

Wind power generation uses wind energy to drive the rotation of a rotor for conversion the wind energy into electrical power. Thus, aerodynamic performance (such as shape and number of blades) is critical to the output efficiency of the wind power generation. There are lots of inventions related to the wind power generation, such as US Patent No. 7, 094,018 B2, Taiwan Utility Model Publication No. M279736, Design No. D 119380, and US Patent No. 4,075,500.

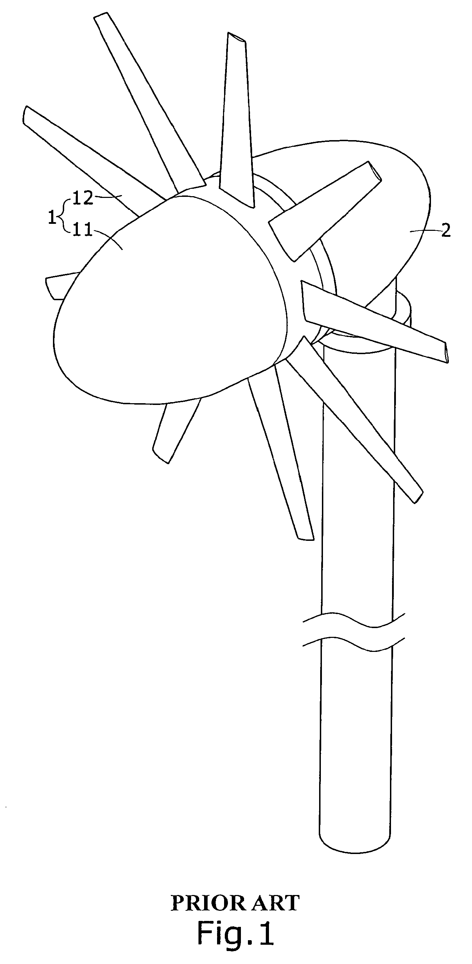

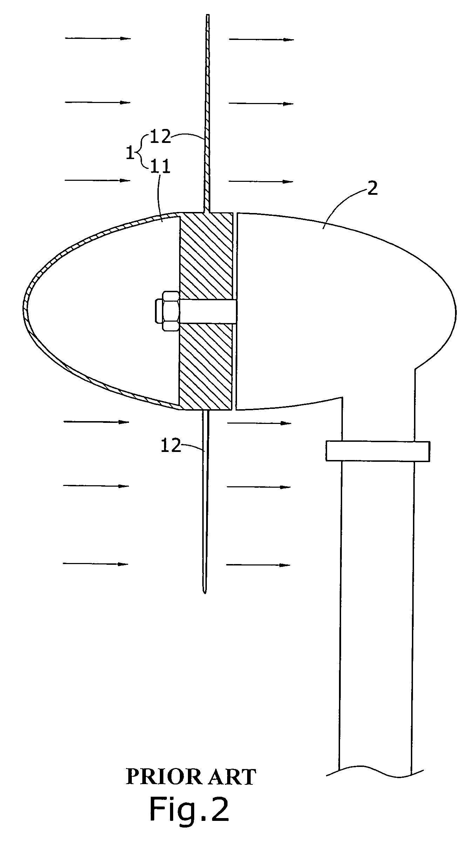

As shown in FIG. 1 of the attached drawings, a conventional rotor 1 comprises a central hub 11 from which a plurality of blades 12 radially extends. The rotor illustrated in the drawing is of a type having nine blades 12. The central hub 11 is coupled to a drive shaft of a generator 2. However, as shown in FIG. 2, when this type of known rotor 1 is put in operation, air flows caused by winds to move through the rotor 1 are broken by ends of the blades 12, leading to generation of noise and turbulences. The turbulences may cause expansion of the air flows, decelerating the air flow and thus reducing the rotational speed of the rotor 1 and eventually affecting the performance of wind power generation.

SUMMARY OF THE INVENTION

Thus, an objective of the present invention is to provide a rotor structure of a wind turbine, which increases the speed of the air flow passing the rotor so as to improve performance of power generation.

Another objective of the present invention is to provide a rotor structure of a wind turbine that reduces noise.

A further obj ective of the present invention is to provide a rotor structure of a wind turbine that offers greater flexibility of design.

A rotor structure of a wind turbine in accordance with the present invention comprises a central hub and a plurality of blades radially extending from the central hub. A hood is circumferentially set around and connected to distal free ends of the blades so that each blade is coupled to the hood to rotate therewith. When the rotor is mounted to a wind turbine for operation, with winds causing air flows entering the rotor, the hood is also caused to rotate and the air flows effect acceleration to thereby improve performance of wind power generation. When the distal ends of the blades rotate with the hood, due to the existence of the hood, noise caused by breaking air flows may not occur. Further, the central hub of the rotor may be provided with a concentrically arranged connection ring to offer flexible increase of the number of blades between the central hub and the hood so as to increase the rotational torque of the rotor and also provide the effect of accelerating the rotation of the rotor. Comparison between the rotor of the present invention and the conventional rotor that is done by coupling theses rotors to generators that are of identical performance of power generation reveals that the size and the area of wind facing surface of the rotor of the present invention are far less than those of the conventional rotors. Thus, the present invention also offers the advantage of reducing the size of rotor.

The foregoing objective and summary provide only a brief introduction to the present invention. To fully appreciate these and other objects of the present invention as well as the invention itself, all of which will become apparent to those skilled in the art, the following detailed description of the invention and the claims should be read in conjunction with the accompanying drawings. Throughout the specification and drawings identical reference numerals refer to identical or similar parts.

Many other advantages and features of the present invention will become manifest to those versed in the art upon making reference to the detailed description and the accompanying sheets of drawings in which a preferred structural embodiment incorporating the principles of the present invention is shown by way of illustrative example.

BRIEF DESCRIPTION OF THE DRAWINGS

FIG. 1 is a perspective view of a conventional rotor.
FIG. 2 is a cross-sectional view illustrating the operation of the conventional rotor.
FIG. 3 is a perspective view of a rotor in accordance with an embodiment of the present invention.
FIG. 4 is a cross-sectional view of the rotor of the embodiment of the present invention.

FIG. 5 is a cross-sectional view showing another type of the rotor of the embodiment of the present invention.

FIG. 6 schematically illustrates the principle of the flow of liquid.

FIG. 7 is a perspective view of a rotor in accordance with another embodiment of the present invention.

FIG. 8 is a cross-sectional view of the rotor of said another embodiment of the present invention.

FIG. 9 is a cross-sectional view showing another type of the rotor of said another embodiment of the present invention.

FIG. 10 is a perspective view of a rotor in accordance with a further embodiment of the present invention.

FIG. 11 is a cross-sectional view of the rotor of said further embodiment of the present invention.

FIG. 12 is a cross-sectional view showing another type of the rotor of said further embodiment of the present invention.

FIG. 13 is a perspective view of a rotor in accordance with yet a further embodiment of the present invention.

FIG. 14 is a cross-sectional view of the rotor of said further embodiment of the present invention.

FIG. 15 shows torque-rotational speed curves for various rotors.

FIG. 16 shows performance-rotational speed curves for various rotors.

## DETAILED DESCRIPTION OF THE PREFERRED EMBODIMENTS

The following descriptions are exemplary embodiments only, and are not intended to limit the scope, applicability or configuration of the invention in any way. Rather, the following description provides a convenient illustration for implementing exemplary embodiments of the invention. Various changes to the described embodiments may be made in the function and arrangement of the elements described without departing from the scope of the invention as set forth in the appended claims.

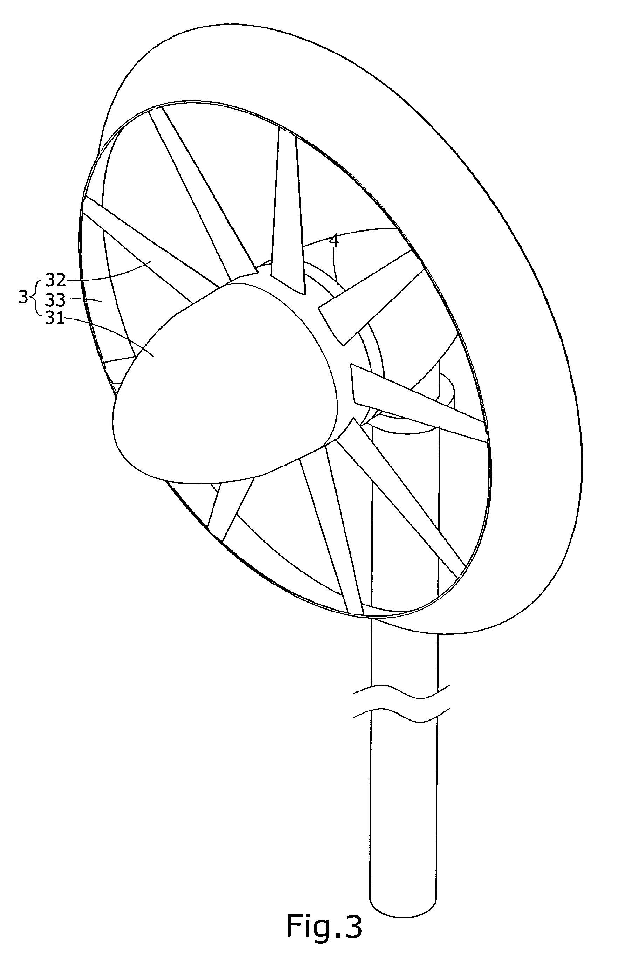

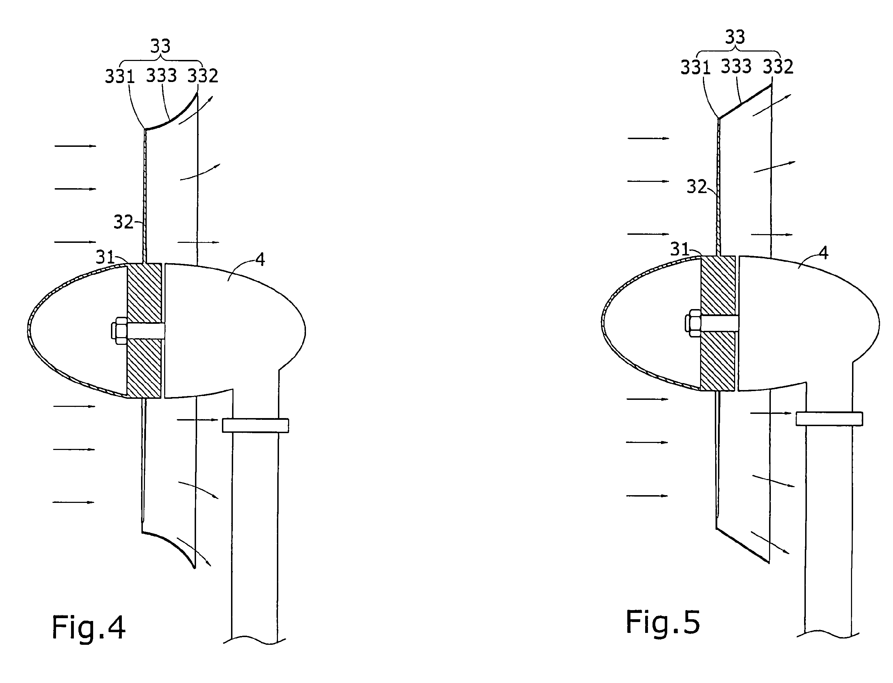

With reference to FIGS. 3-6, a rotor constructed in accordance with the present invention generally designated with reference numeral 3 comprises a central hub 31 from which a plurality of blades 32 radially extends. The blades 32 have distal free ends that are surrounded by and coupled to a circumferentially arranged horn-like hood 33. The hood 33 has a first circumferential edge portion 331 and a second circumferential edge portion 332 and an extension section 333 formed and extending between the first circumferential edge portion 331 and the second circumferential edge portion 332. The first circumferential edge portion 331 has a diameter that is smaller than a diameter of the second circumferential edge portion 332 so that the extension section 333 of the hood 33 exhibits a divergent configuration. The distal end of each blade 32 is connected to an inner surface of the first circumferential edge portion 331 and each blade 32 has a wind facing surface that is in a direction opposite to the extension section 333 of the hood 33. Further, the extension section 333 of the hood 33 can be of an outward-deflected curved configuration (as shown in FIGS. 3 and 4) or a straight configuration that inclines outward (as shown in FIG. 5).

The central hub 31 of the rotor 3 is fit to a drive shaft of a generator 4, and when winds cause air flows to enter through the wind facing surfaces of the blade 32, making the blade 32 rotating, the power generated by the generator 4 can be calculated with the following equation:

$$P = \frac{1}{2}\rho AV^3$$

where P is the power generated, p indicates air density, A represents a cross-sectional area of the rotor, and V is the speed of the air flow. It is apparent from the equation that since the air density can be considered fixed and is regarded as a constant, to change the power generated, a feasible way is to change the cross-sectional area of the rotor, or to change the speed of air flow, between which changing the speed of the airflow is of more remarkable results.

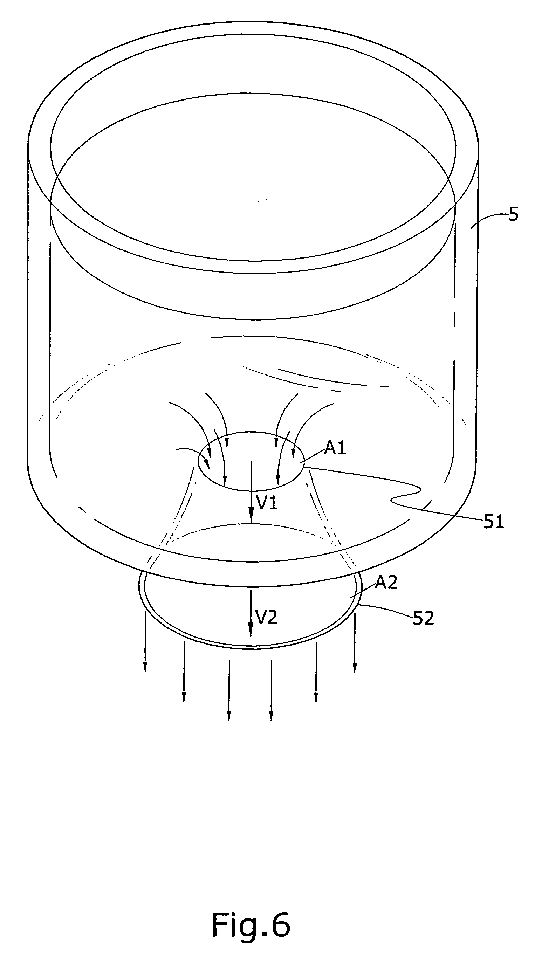

Also referring to FIG. 6, a circular opening 51 is formed in a bottom of a container 5 that is full of liquid. The circular opening 51 has a cross-sectional area of $A_1$ and the speed of the liquid flow in the circular opening 51 is $V_1$. By adding a horn-like hood 52 that diverges outwards under the circular opening 51, with the cross-sectional area of the horn-like hood 52 being $A_2$ and the speed that the liquid flows outward being $V_2$, in accordance with fluid dynamics, $A_1V_1=A_2V_2$, it is evident that when the liquid flows through the outward-divergent horn-like hood 52, expansion of the liquid is induced (namely, $A_2>A_1$). Although the speed of outward flow $V_2$ is reduced (namely $V_1$ being greater than $V_2$), yet acceleration of the liquid results when the liquid enters the hood 52. Based on the same principle, the hood 52 in accordance with the present invention is designed on the basis of the effect of expansion to accelerate the speed of air flow and thus improve the performance of power generation. For example, increasing the flow speed to 1.1 times make an increase of power generated by $1.1^3$ times, namely .133 times of power generated.

On the other hand, the power generation performance is conventionally increased by increasing area, which makes the original size increased to 1.33 times to provide the same power generation performance. This makes the conventional techniques facing problems associated with machining precision in the manufacturing thereof, as well as drawbacks associated with wastes in the respects of manufacturing and material costs. In addition, in use, due to the increase of the size of the rotor 3, additional limitation is imposed to the installation thereof, making it difficult to get popular. Taking a generator 4 having the same power generation capacity as an example, since the speed of the incoming air flow in the present invention can be made higher, when compared to the conventional rotor 1 (see FIG. 1) having a fixed air flow speed, the present invention allows a reduction of the cross-sectional area (in other words, reducing the overall size). Further, when the hood 33 is put in rotation, since no breaking of air flow occurs, the noise induced by the operation thereof can be reduced.

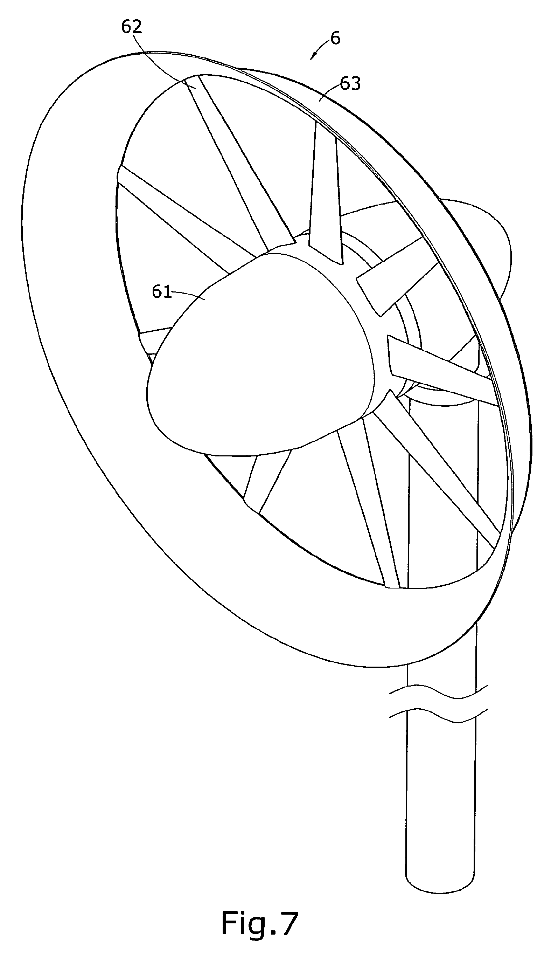

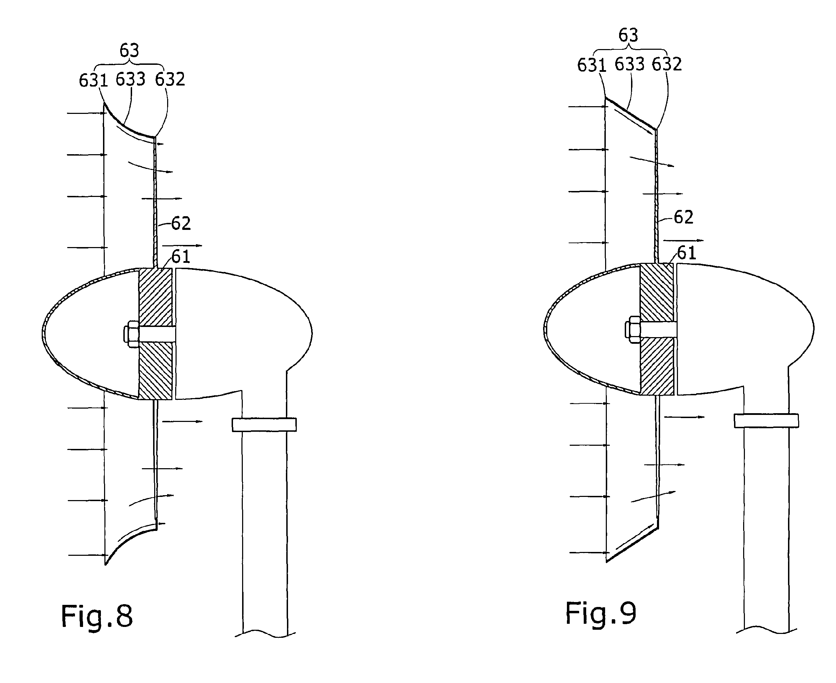

As shown in FIGS. 7-9, in another embodiment, the distal ends of the blades 62 that are mounted to the central hub 61 of the rotor 6 are similarly surrounded by and coupled to a horn-like hood 63 and the hood 63 has a first circumferential edge portion 631 and a second circumferential edge portion 632 with an extension section 633 similarly formed and extending between the first circumferential edge portion 631 and the second circumferential edge portion 632. The first circumferential edge portion 631 has a diameter that is greater than that of the second circumferential edge portion 632 so that the extension section 633 exhibits a convergent configuration. The distal end of each blade 62 is connected to an inner surface of the second circumferential edge portion 632 and each blade 62 has a wind facing surface that is in the same direction as the extension section of the hood 63. Further, the extension section 633 of the hood 63 is of an outward-deflected curved configuration (as shown in FIGS. 7 and 8) or a straight configuration that inclines outward (as shown in FIG. 9).

As shown in FIGS. 8 and 9, when winds cause air flows to enter through the wind facing side of the rotor 6, the air flows first contact the convergent configuration of the curved or straight hood 63 (namely the side corresponding to the first circumferential edge portion 631), making the air flows moving toward the side corresponding to the second circumferential edge portion 632 and thus concentrated centrally with increased flow speed, whereby the force that acts on and drives the blades is increased and the power generation performance is improved.

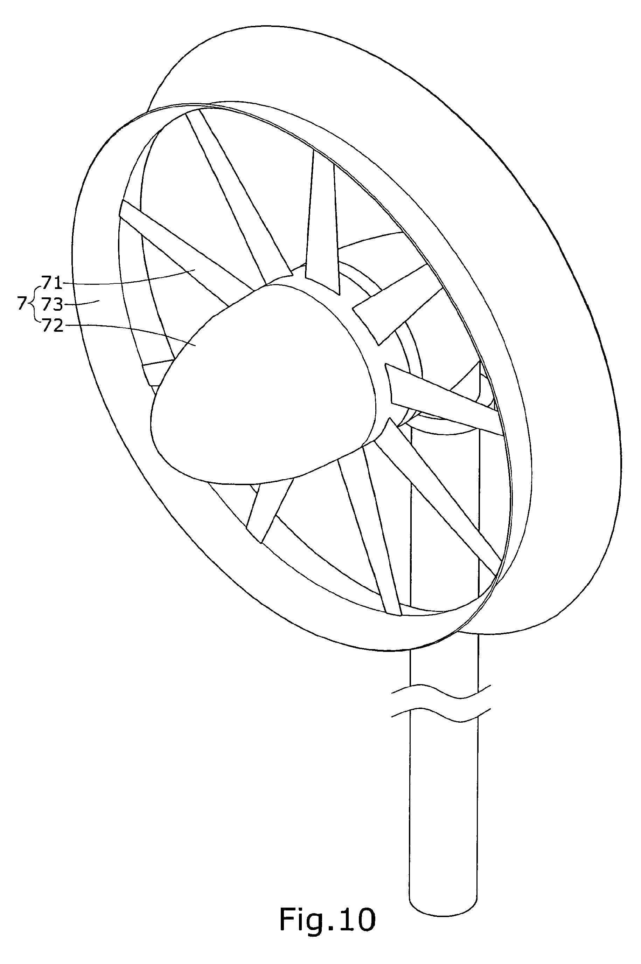

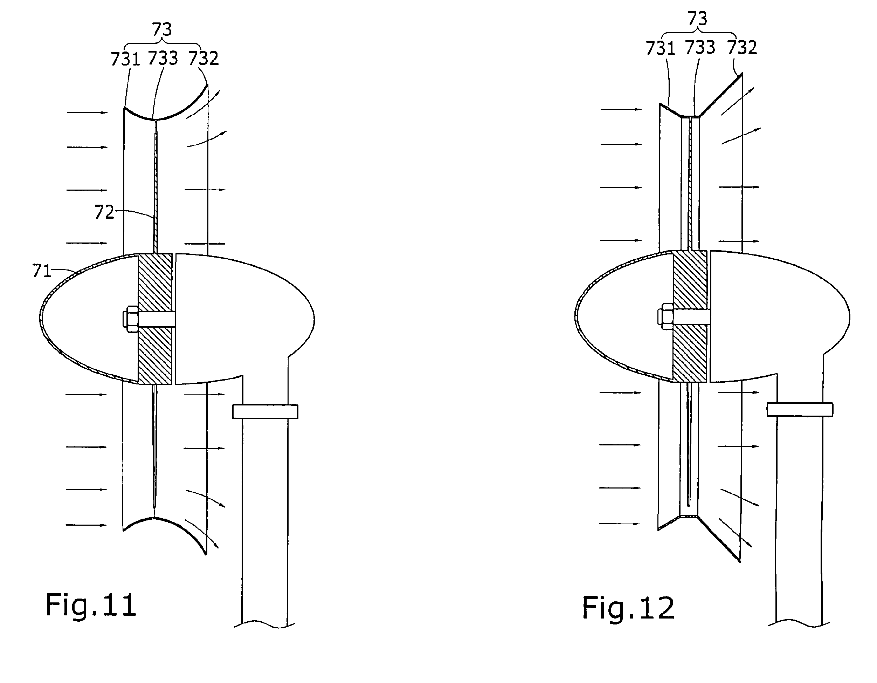

As shown in FIGS. 10-12, in a further embodiment, the distal ends of the blades 72 that are mounted to the central hub 71 of the rotor 7 are provided with a horn-like hood 73. Two opposite side portions of the hood 73 respectively comprises a first circumferential edge portion 731 and a second circumferential edge portion 732, both being convergent, with an extension section 733 similarly formed and extending therebetween. Each blade 72 is connected to the inner surface of the extension section 733 and each blade 72 has a wind facing surface that is in a direction toward the first circumferential edge portion 731. The portion of the hood 73 from the first circumferential edge portion 731 to the extension section 733 is of an inward-deflected curved configuration (see FIG. 11) or a straight configuration that inclines inward (see FIG. 12) and the portion of the hood 73 from the extension section 733 to the second circumferential edge portion 732 is of an outward-deflected curved configuration (see FIG. 11) or a straight configuration that inclines outward (see FIG. 12). The first circumferential edge portion 731 has a diameter that is smaller than that of the second circumferential edge portion 732.

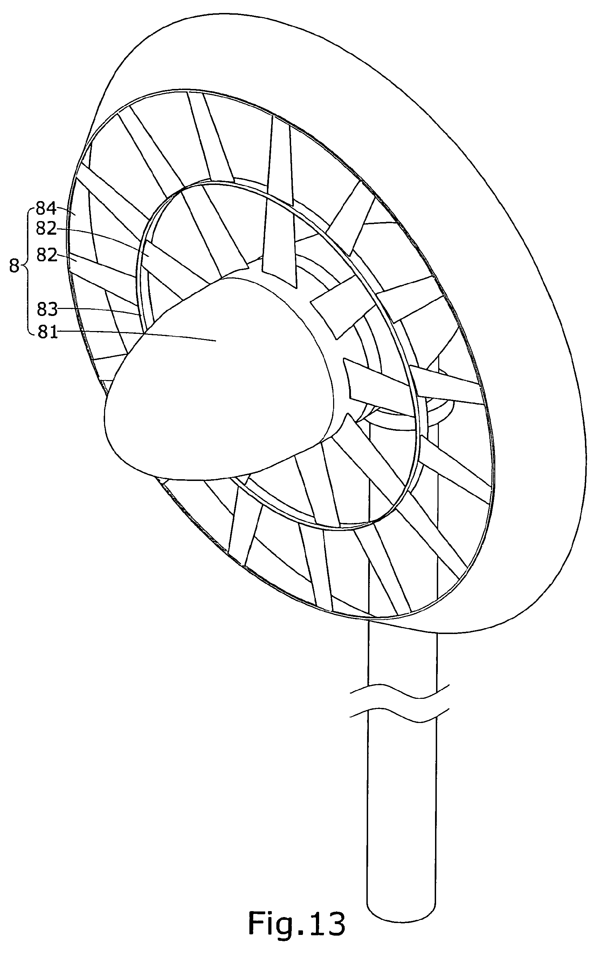

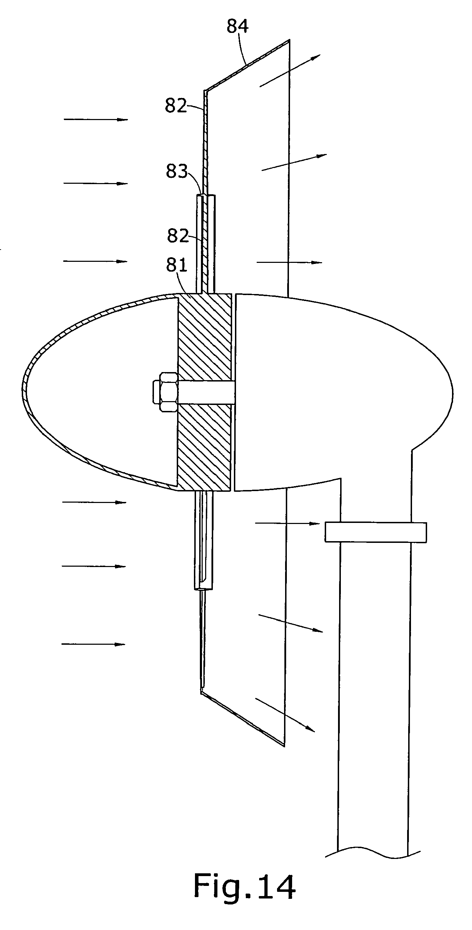

As shown in FIGS. 13 and 14, when winds cause air flows to enter through the wind facing side of the rotor 7, the air flows first contact the curved or straight convergent configuration of the first circumferential edge portion 731, making the air flows concentrated centrally to realize a first stage of acceleration. Further, since the portion from the extension section 733 to the second circumferential edge portion 732 shows a divergent configuration, based on the effect of flow expansion discussed previously, a second stage of acceleration is induced. With the two stages of acceleration, the air flows applies a speed to the rotation of the drive the blades 72 that are arranged in the extension section 733, thereby increasing the force driving the blades 72 and more brilliantly improving the performance of power generation.

As shown in FIGS. 13 and 14, the present inventor makes a further improvement to the construction of the blades 82 of the rotor 8, wherein the central hub 81 of the rotor 8 is provided, at an outer side thereof, with at least one concentrically arranged connection ring 83 and a plurality of blades 82 connects between the connection ring 83 and the central hub 81, while another plurality of blades 82 connects between the connection ring 83 and the hood 84. The number of the blades 82 that connect between the connection ring 83 and the central hub 81 is less than that of the blades 82 connecting between the connection ring 83 and the hood 84. The blades 82 between the connection ring 83 and the hood 84 are used to increase the rotational torque of rotor 8 without affecting incoming air flow rate (or also referred to as thickness) so as to increase the rotational speed of the rotor 8 and improve power generation performance. Further, the configuration of the hood 84 can be any one of the hoods 33, 63, 73 illustrated in FIGS. 3-12, such as the divergent hood 33, the convenient hood 63 or the convergent-divergent hood 73, and the hood 84 is connected to the outer set of the blades 82 to also effect increase of air flow speed and improvement of power generation performance.

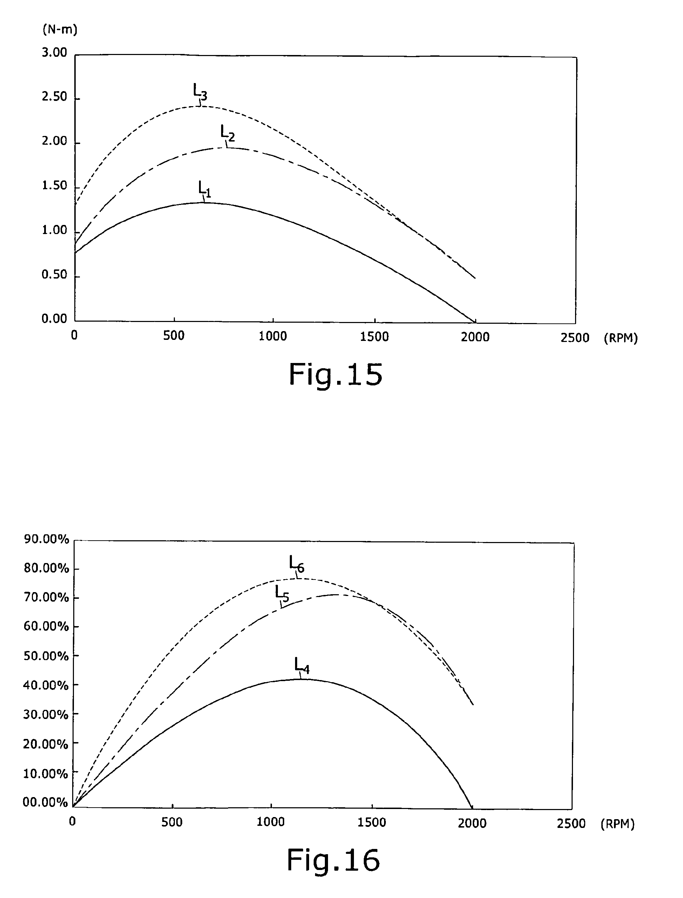

Also referring to FIGS. 15 and 16, the present inventor has taken records of the operations of the conventional rotor, the divergent rotor, and the multi-stage-blade rotor and comparison is made for the torque-rotational speed relationship and the performance-rotational speed relationship to evidence the difference between the present invention and the conventional techniques and the improved performance realized by the present invention.

As shown in FIG. 15, $L_1$ indicates the torque-rotational speed curve of the conventional rotor, $L_2$ is the torque-rotational speed curve of the divergent rotor, and

$L_3$ is the torque-rotational speed curve of the multi-stage-blade rotor, for there is a corresponding relationship between the torque and the angular momentum that drives the rotation of the rotor. When the rotational speed is zero (0), the torque generated is referred to as the brake torque (the higher the better). Comparison of theses curves indicates that the curve having a peak showing up earliest is Curve $L_3$ (the earlier the better), and then sequentially Curve $L_2$ and Curve $L_1$. It can be seen that the peak torque value of the present invention appears in a lower rotational speed and thus, a good angular momentum can be obtained early at a low rotational speed, resulting in excellent power generation performance.

Further, as shown in FIG. 16, $L_4$ indicates a performance-rotational speed curve of the conventional rotor, $L_5$ is the performance-rotational speed curve of the divergent rotor, and $L_6$ is the performance-rotational speed curve of the multi-stage-blade rotor. The performance (CP) is calculated with the following equation:

$$CP = \frac{\tau \cdot \omega}{\frac{1}{2}\rho A V^3}$$

where τ indicates torque, ω is angular speed, P is power, p is air density, A is cross-sectional area of rotor, and V is speed of air flow.

In accordance with the above equation, the performance curve of each rotor can be calculated. The maximum performance of the conventional rotor for conversion of wind power into mechanical power is 0.593, which is set by Betz limit and the performance can be calculated by multiplying it with a power coefficient. As shown in the drawing, the performance provided by the present invention is higher than that of the conventional techniques. In other words, using the present invention to generate power has a higher performance.

To conclude, the present invention offers the following advantages:

(1) As shown in FIGS. 3-6, the divergent hood 33 of the present invention applies the effect of air flow expansion to increase the air flow speed at the wind facing surfaces of the blades 32 to thereby improve the performance of power generation.

(2) As shown in FIGS. 7-9, the convergent hood 63 of the present invention centrally concentrates the air flows so as to increase the air flow speed at the wind facing surface of the blades 62 to thereby improve the performance of power generation.

(3) As shown in FIGS. 10-12, the convergent-divergent hood 73 of the present invention may centrally concentrate the air flows to provide a first stage acceleration and further applies the effect of expansion to provide a second stage of acceleration whereby dual effect of acceleration is realized to increase the force driving the blades 72 and thus effectively improve the performance of power generation.

(4) Further, as shown in FIGS. 3-12, the various configurations of the hoods 33, 63, 73 offered by the present invention is rotated in synchronization with the blades 32, 62, 72 so that breaking air flow does not occur and the noise induced in the operation can be reduced.

(5) As shown in FIGS. 13 and 14, the multi-stage-blade rotor 8 of the present invention comprises at least one internally set connection ring 83 and blades 82 are respectively between the connection ring 83 and the hood 84 and between the connection ring 83 and the central hub 81, whereby without affecting incoming flow rate, the rotational torque of the rotor 1 can be increased to effect acceleration of the rotation of the rotor 1, which also leads to improvement of the performance of power generation. Thus, as compared to the known techniques, the present invention is useful in meeting various needs for different applications and offers flexibility in design practice.

While certain novel features of this invention have been shown and described and are pointed out in the annexed claim, it is not intended to be limited to the details above, since it will be understood that various omissions, modifications, substitutions and changes in the forms and details of the device illustrated and in its operation can be made by those skilled in the art without departing in any way from the spirit of the present invention.

**Claims**

1. A rotor of a wind turbine comprising a central hub and a plurality of blades radially extending from the central hub, **characterized in that** a hood is circumferentially arranged at distal ends of the blades.

2. The rotor according to claim 1, wherein a connection is concentrically arranged outside the central hub, a plurality of blades being set between the connection ring and the central hub, a further plurality of blades being arranged at an opposite side of the connection ring and having distal ends to which a hood is circumferentially mounted.

3. The rotor according to claim 2, wherein the blades between the connection ring and the central hub have a number less than a number of the blades between the connection ring and the hood.

4. The rotor according to claim 1, wherein the hood has a first circumferential edge portion and a second circumferential edge portion, an extension section being formed and extending between the first circumferential edge portion and the second circumferential edge portion, the first circumferential edge portion having a diameter that is smaller than a diameter of the second circumferential edge portion so that the extension section is of a divergent configuration, the blades being connected to an inner surface of the first circumferential edge portion.

5. The rotor according to claim 4, wherein the extension section is of an outward-deflected curved or outward-inclined straight configuration.

6. The rotor according to claim 1, wherein the hood has a first circumferential edge portion and a second circumferential edge portion, an extension section being formed and extending between the first circumferential edge portion and the second circumferential edge portion, the first circumferential edge portion having a diameter that is greater than a diameter of the second circumferential edge portion so that the extension section is of a convergent configuration, the blades being connected to an inner surface of the second circumferential edge portion.

7. The rotor according to claim 6, wherein the extension section is of an outward-deflected curved or outward-inclined straight configuration.

8. The rotor according to claim 1, wherein the hood has two opposite portions respectively forming first and second divergent circumferential edge portions between which an extension section is formed and extends, the blades being connected to the extension section, the blades having wind facing surfaces in a direction toward the first circumferential edge portion.

9. The rotor according to claim 8, wherein the portion from the first circumferential edge portion to the extension section has an inward-deflected curved configuration and the portion from the extension section to the second circumferential edge portion has an outward-deflected curved configuration.

10. The rotor according to claim 8, wherein the portion from the first circumferential edge portion to the extension section has an inward-inclined straight configuration and the portion from the extension section to the second circumferential edge portion has an outward-inclined straight configuration.

11. The rotor according to claim 8, wherein the first circumferential edge portion has a diameter that is smaller than a diameter of the second circumferential edge portion.

**PRIOR ART**

# Fig.1

**PRIOR ART**
# Fig.2

Fig.3

Fig.5

Fig.4

Fig.6

Fig.7

Fig.8

Fig.9

Fig.10

Fig.12

Fig.11

Fig.13

Fig.14

Fig.15

Fig.16

EP 2 180 181 A1

Europäisches
Patentamt
European
Patent Office
Office européen
des brevets

**EUROPEAN SEARCH REPORT**

Application Number

EP 08 01 8610

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/232957 A1 (PRESZ WALTER M [US] ET AL PRESZ WALTER JR [US] ET AL) 25 September 2008 (2008-09-25) * abstract * * figures 2-5 * * paragraphs [0061] - [0063] * | 1-11 | INV. F03D1/02 F03D1/04 |
| X | WO 2007/043894 A (SWAY AS [NO]; BORGEN EYSTEIN [NO]) 19 April 2007 (2007-04-19) * abstract * * figures 2-4 * | 1-11 | |
| X | WO 2006/137780 A (KNES OF SWEDEN AB [SE]; KNEZ JORDAN [SE]) 28 December 2006 (2006-12-28) * abstract * * figures 1-4 * | 1-11 | |
| X | WO 2008/120026 A (BOSA SA [GR]; CHATJIANASTASIOU KONSTANTINOS [GR]) 9 October 2008 (2008-10-09) * abstract * * figures 4,5 * | 1-11 | TECHNICAL FIELDS SEARCHED (IPC) F03D |
| X | WO 2006/007696 A (TOCHER ANGUS J [CA]) 26 January 2006 (2006-01-26) * abstract * * figure 1 * | 1-11 | |
| X | WO 2004/083631 A (RENEWABLE DEVICES LTD [GB]; ANDERSON DAVID EWART [GB]; SILVERTON CHARL) 30 September 2004 (2004-09-30) * abstract * * figures 1a,1b * | 1-11 | |

The present search report has been drawn up for all claims

| Place of search | Date of completion of the search | Examiner |
|---|---|---|
| Munich | 17 June 2009 | Giorgini, Gabriele |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 08 01 8610

This annex lists the patent family members relating to the patent documents cited in the above-mentioned European search report.
The members are as contained in the European Patent Office EDP file on
The European Patent Office is in no way liable for these particulars which are merely given for the purpose of information.

17-06-2009

| Patent document cited in search report | | Publication date | Patent family member(s) | | Publication date |
|---|---|---|---|---|---|
| US 2008232957 | A1 | 25-09-2008 | WO | 2008118405 A2 | 02-10-2008 |
| WO 2007043894 | A | 19-04-2007 | AU | 2006300003 A1 | 19-04-2007 |
| | | | CA | 2625542 A1 | 19-04-2007 |
| | | | CN | 101360914 A | 04-02-2009 |
| | | | EP | 1937967 A1 | 02-07-2008 |
| | | | JP | 2009511817 T | 19-03-2009 |
| | | | KR | 20080072825 A | 07-08-2008 |
| | | | WO | 2007043895 A1 | 19-04-2007 |
| | | | US | 2008292467 A1 | 27-11-2008 |
| WO 2006137780 | A | 28-12-2006 | EP | 1899601 A1 | 19-03-2008 |
| | | | SE | 528304 C2 | 17-10-2006 |
| | | | SE | 0501461 A | 17-10-2006 |
| | | | US | 2009087310 A1 | 02-04-2009 |
| WO 2008120026 | A | 09-10-2008 | GR | 1005872 B1 | 15-04-2008 |
| WO 2006007696 | A | 26-01-2006 | AU | 2005263138 A1 | 26-01-2006 |
| | | | EP | 1778972 A1 | 02-05-2007 |
| | | | JP | 2008506877 T | 06-03-2008 |
| WO 2004083631 | A | 30-09-2004 | AU | 2004221591 A1 | 30-09-2004 |
| | | | CA | 2518742 A1 | 30-09-2004 |
| | | | CN | 1788155 A | 14-06-2006 |
| | | | EP | 1604109 A2 | 14-12-2005 |
| | | | JP | 2006520871 T | 14-09-2006 |
| | | | US | 2006244264 A1 | 02-11-2006 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7094018 B2

- US 4075500 A